# FASCICULE DE BREVET EUROPEEN

(11) **EP 3 361 058 B1**
(45) Date de publication et mention de la délivrance du brevet: **01.04.2020**
(21) Numéro de dépôt: 18154805.8
(22) Date de dépôt: 02.02.2018
(51) Int. Cl.: F01D 17/16, F04D 29/56, F16H 1/08

(54) **COMPRESSEUR DE TURBOMACHINE ET TURBOMACHINE ASSOCIÉE**
VERDICHTER EINER TURBOMASCHINE UND ZUGEHÖRIGE TURBOMASCHINE
TURBOMACHINE COMPRESSOR AND CORRESPONDING TURBOMACHINE

(30) Priorité: 09.02.2017 BE 201705084
(43) Date de publication de la demande: 15.08.2018
(73) Titulaire: Safran Aero Boosters SA, 4041 Herstal (BE)
(72) Inventeur: VALLINO, Frédéric, 4100 Seraing (BE)
(74) Mandataire: Lecomte & Partners

(56) Documents cités:
- FR-A- 860 357
- FR-A1- 2 914 944
- GB-A- 644 178

## Description

### Domaine technique

L'invention se rapporte au domaine des compresseurs de turbomachine. Plus précisément, l'invention concerne un système de commande des aubes à orientation variable. L'invention a également trait à une turbomachine axiale, notamment un turboréacteur d'avion ou un turbopropulseur d'aéronef.

### Technique antérieure

Certains compresseurs de turbomachine comprennent une rangée annulaire d'aubes de stator à orientation variable. Ces aubes présentent la particularité de pivoter sur elles-mêmes si bien que leur corde change d'inclinaison par rapport à l'axe de rotation de la turbomachine. Ainsi, la déviation de flux produite par ces aubes peut être modulée. Cela permet de s'adapter à différentes conditions de fonctionnement de la turbomachine, et d'améliorer la marge au pompage. Cette modification d'orientation des aubes peut se faire notamment grâce à des vérins hydrauliques.

Le document FR 2 914 944 A1 divulgue un système d'engrenages incluant des dentures de commande des aubes à orientation variable qui s'engrènent à la denture complémentaire d'un anneau de commande. Ces engrenages sont des roues dentées, simplifiant le fonctionnement antérieur et l'allégeant grâce à l'utilisation d'un moteur électrique pour permettre l'orientation des aubes. Cependant du jeu peut se développer entre les différentes pièces de l'engrenage entraînant un manque de rigidité de l'ensemble de la structure.

### Résumé de l'invention

### Problème technique

L'invention a pour objectif de résoudre au moins un des problèmes posés par l'art antérieur. Plus précisément, L'invention a pour objectif d'améliorer la rigidité d'un système de commande d'aubes à orientation variable. L'invention a également pour objectif d'améliorer la stabilité du système de commande. Enfin, l'invention a également pour objectif de proposer une solution simple, résistante, légère, économique, fiable, facile à produire.

### Solution technique

L'invention a pour objet un compresseur de turbomachine à géométrie variable, en particulier de turboréacteur, comprenant : au moins une rangée annulaire d'aubes à orientation variable, chacune des aubes comportant une denture de commande, et un anneau de commande avec une denture de commande complémentaire coopérant avec les dentures de commande des aubes de manière à varier leurs orientations, remarquable en qu'au moins une ou chaque denture de commande est une denture à chevrons, chaque chevron comprenant des dents formant entre elles un angle β compris entre 60° et 150°.

Selon un mode avantageux de l'invention, les dents de chevron forment entre elles un angle β compris entre 90° et 120°.

Selon un mode avantageux de l'invention, chaque dent de chevron s'étend selon un segment moyen, l'angle β étant définit entre les segments moyens d'un même chevron.

Les deux segments se rejoignent au milieu de la bague selon un angle β et forment un chevron. La denture est composée de plusieurs chevrons, qui sont orientés transversalement à la denture.

Selon un mode avantageux de l'invention, les dentures des aubes et de l'anneau de commande sont configurées de manière à ce que chaque aube comprenne au moins deux ou au moins quatre chevons simultanément en contact de l'anneau.

Selon un mode avantageux de l'invention, le compresseur comprend en outre : un carter externe à l'intérieur duquel les aubes à orientation variable sont montées de manière pivotante, notamment selon un axe de pivotement radial.

Selon un mode avantageux de l'invention, chaque aube comprend une broche traversant radialement le carter externe, préférentiellement le carter externe comprend des orifices recevant les broches des aubes de manière à former des liaisons pivot.

Selon un mode avantageux de l'invention, l'anneau de commande est réalisé en métal, et le carter est réalisé en matériau composite à matrice organique avec des fibres de carbone et/ou des fibres de verre.

Selon un mode avantageux de l'invention, l'anneau de commande forme une boucle autour du carter externe.

Selon un mode avantageux de l'invention, les aubes à orientation variable peuvent présenter une broche dans leur extrémité radialement interne, ladite broche comportant une denture de commande, engrenée dans la denture complémentaire de l'anneau de commande positionnée en boucle autour du carter interne.

Selon un mode avantageux de l'invention, l'anneau de commande est entraîné par au moins un actionneur, notamment un moteur électrique.

L'actionneur peut également être un vérin hydraulique.

Selon un mode avantageux de l'invention, la denture de commande de chaque aube comprend au moins 30 chevrons.

Selon un mode avantageux de l'invention, la denture complémentaire de l'anneau de commande comprend au moins 300 chevrons.

Les dentures de commandes et les dentures complémentaires peuvent comprendre au moins 40 chevrons, plus préférentiellement 50 chevrons.

Selon un mode avantageux de l'invention, chaque denture forme une bague monobloc.

Les dentures monobloc présentent l'avantage d'être plus résistantes que les dentures normales, du fait du caractère continu des chevrons.

Selon un mode avantageux de l'invention, chaque denture comprend un sillon central entre les deux dents des chevrons.

Le sillon central diminue la résistance de la denture mais facilite l'usinage de la pièce.

Selon un mode avantageux de l'invention, chaque denture est formée par deux bagues à hélices contraires dont les dents se rejoignent au centre.

Cette conception permet de faciliter l'usinage et diminue le déplacement axial des bagues.

Selon un mode avantageux de l'invention, le compresseur comprend un stator et un rotor monté tournant par rapport au stator, les aubes à orientation variables étant solidaires du stator.

Selon un mode avantageux de l'invention, chaque aube comprend une moitié amont et une moitié aval, chaque axe de pivotement d'aube étant disposé en moitié amont.

Selon un mode avantageux de l'invention, la denture de commande de chaque aube forme un segment angulaire, chaque segment angulaire d'aube s'étendant sur au plus : 180°, ou 120°, ou 90°, ou 60°, ou 45°, ou 30°.

Selon un mode avantageux de l'invention, chaque segment angulaire d'aube s'étend sur au moins : 10°, ou 20°, ou 30°, ou 45°.

Selon un mode avantageux de l'invention, l'anneau de commande comprend des zones angulaires à denture en chevrons, et des zones angulaires libres de denture disposées par alternance avec les zones à dentures.

Selon un mode avantageux de l'invention, l'anneau de commande comprend une ou plusieurs denture(s) complémentaire(s), chaque denture de commande d'aube étant compatible à la ou à l'une des denture(s) complémentaire(s) de l'anneau.

L'invention a également pour objet une turbomachine, notamment un turboréacteur, comprenant au moins un compresseur avec un rotor, caractérisée en ce que le ou au moins un compresseur est conforme à l'invention, préférentiellement le ou au moins un compresseur est un compresseur basse-pression ou un compresseur haute pression, la turbomachine comprenant le moteur électrique adapté pour entraîner en rotation l'anneau de commande.

De manière générale, les modes avantageux de chaque objet de l'invention sont également applicables aux autres objets de l'invention. Chaque objet de l'invention est combinable aux autres objets, et les objets de l'invention sont également combinables aux modes de réalisation de la description, qui en plus sont combinables entre eux, selon toutes les combinaisons techniques possibles.

### Avantages apportés

Les mesures de l'invention sont intéressantes en ce que la forme des dentures en chevrons limite le mouvement radial des aubes par rapport à la bague de commande. Ainsi, l'anneau de commande peut être maintenu radialement sur les aubes grâce à leurs dentures qui restent en prise. En retour, l'anneau contribue à maintenir radialement les aubes, et forme un cerclage. Ce maintien est d'autant plus efficace que l'anneau forme une bouche en contact de l'ensemble de la rangée annulaire. Plus précisément, l'anneau maintien une aube grâce à une autre aube diamétralement opposée ; et ce grâce à leurs dentures respectives.

Par ailleurs, la solution à chevrons améliore le blocage des dentures, et limite l'effet des vibrations car un chevron offre une action à double sens. Les vibrations sont amorties par davantage de frottement. Aussi, la solution à chevrons évite le basculement selon l'axe de rotation entre l'aube et l'anneau. Ceci permet de réduire les exigences en termes de maintien des aubes et de l'anneau par rapport au carter. Ces effets deviennent sensibles dès une inclinaison de dents comprise entre 60° et 150°, et s'améliore encore entre 90° et 120°.

### Brève description des dessins

La figure 1 représente une turbomachine axiale selon l'invention.
La figure 2 est un schéma d'une portion d'un compresseur de turbomachine de la figure 1 selon l'invention.
La figure 3 illustre l'extrémité supérieure d'une aube à orientation variable avec les dentures de commande des figures 1 et 2 selon l'invention.
Les figure 4 est un schéma d'une denture en chevrons selon un premier mode de réalisation de l'invention.
Les figure 5 est un schéma d'une denture en chevrons selon un deuxième mode de réalisation de l'invention.

### Description des modes de réalisation

Dans la description qui va suivre, les termes « interne » et « externe » renvoient à un positionnement par rapport à l'axe de rotation d'une turbomachine axiale.

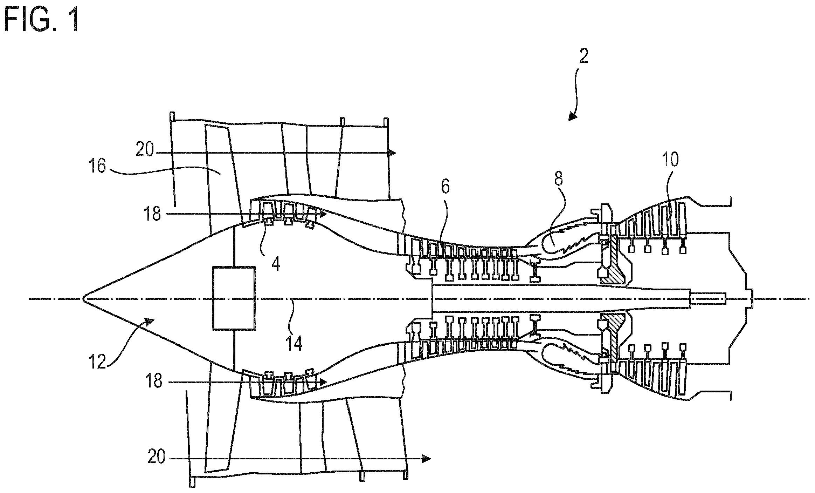

La figure 1 représente de manière simplifiée une turbomachine axiale 2. Il s'agit dans ce cas précis d'un turboréacteur double-flux. Le turboréacteur 2 comprend un premier niveau de compression, dit compresseur basse-pression 4, un deuxième niveau de compression, dit compresseur haute-pression 6, une chambre de combustion 8 et un ou plusieurs niveaux de turbines 10. En fonctionnement, la puissance mécanique de la turbine 10 transmise via l'arbre central jusqu'au rotor 12 met en mouvement les deux compresseurs 4 et 6. Ces derniers comportent plusieurs rangées d'aubes de rotor associées à des rangées d'aubes de stators. La rotation du rotor 12 autour de son axe de rotation 14 permet ainsi de générer un débit d'air et de comprimer progressivement ce dernier jusqu'à l'entrée de la chambre de combustion 8.

Un ventilateur d'entrée communément désigné fan ou soufflante 16 est couplé au rotor 12 et génère un flux d'air qui se divise en un flux primaire 18 traversant les différents niveaux sus mentionnés de la turbomachine, et en un flux secondaire 20 traversant un conduit annulaire (partiellement représenté) le long de la machine pour ensuite rejoindre le flux primaire 18 en sortie de turbine.

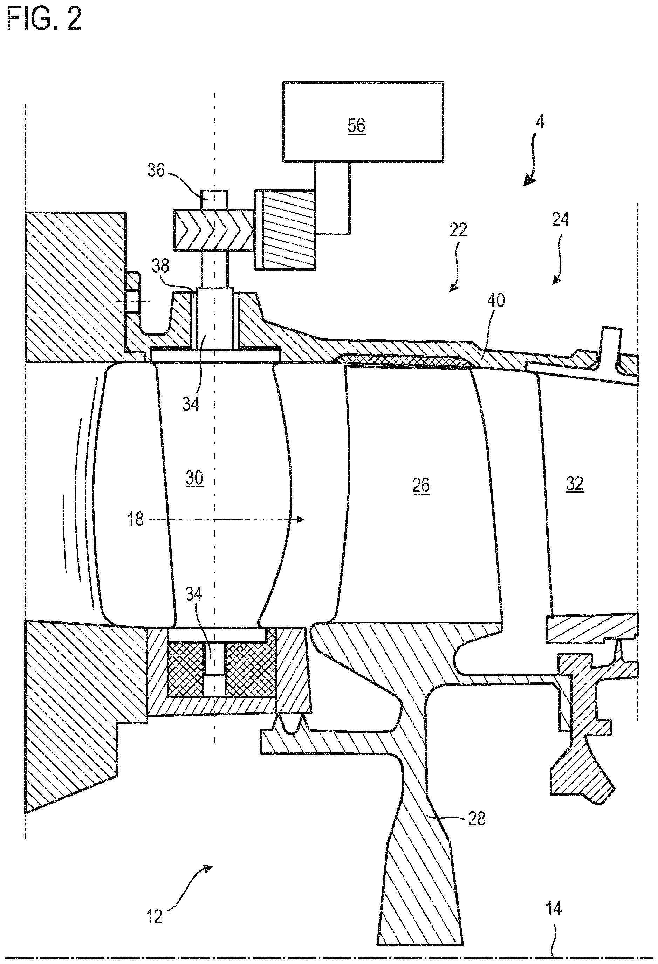

Le flux secondaire 20 peut être accéléré de sorte à générer une réaction de poussée. Les flux primaire 18 et secondaire 20 sont des flux annulaires coaxiaux et emmanchés l'un dans l'autre. Ils sont canalisés par un carter externe 24 de la turbomachine 2. A cet effet, le carter 24 présente des parois cylindriques qui peuvent être internes et externes 40 (représentée à la figure 2).

La figure 2 est une vue partielle en coupe d'un compresseur (4, 6) d'une turbomachine axiale telle que celle de la figure 1. Le compresseur peut être un compresseur basse-pression 4. On peut y observer une partie de la soufflante 16 et le rotor 12 comprenant une rangée d'aubes rotoriques 26. Ces aubes rotoriques 26 sont fixées par une jante de support 28 au rotor 12. A cet effet le rotor peut comprendre un tambour ou un disque formant la jante de support 28.

Le compresseur basse pression 4 comprend plusieurs redresseurs qui contiennent chacun une rangée d'aubes statoriques (30 ; 32). Les redresseurs sont associés au fan 16 ou à une rangée d'aubes rotoriques 26 pour redresser le flux d'air primaire 18, de sorte à convertir la vitesse du flux en pression.

Le compresseur 4 comprend un stator 22 formant les redresseurs. Le compresseur 4 comprend plusieurs rangées d'aubes 32 reliées au stator 22, dont des aubes à orientation variable 30, également couramment appelées « VSV » qui est l'acronyme de l'expression anglo-saxonne « Variable Stator Vane ». Ces aubes orientables 30 présentent des cordes pouvant basculer par rapport à la l'axe de rotation 14 du compresseur 4. Leurs surfaces intrados peuvent plus ou moins intercepter le flux primaire 18 pour le dévier selon différents angles. Optionnellement, le compresseur 4 comporte une rangée annulaire d'aubes à orientation fixe 32 par rapport au stator 22. Ces aubes fixes 32 forment un ensemble monobloc avec le carter 24. Une seule rangée des aubes supplémentaires 32 est visible en figure 2, toutefois il est envisageable de prévoir plusieurs rangées.

Les aubes orientables 30 s'étendent essentiellement radialement depuis le carter externe 24, et peuvent y être stabilisées à l'aide de broches 36. Ces broches 36 stabilisent les extrémités des aubes 30 dans un orifice ajusté 38 du carter 24. La fixation des aubes 30 est facilitée par la présence de tourillons 34 engagés dans la virole interne et formant des tronçons de broche 36. Au sein d'une même rangée, les aubes orientables 30 sont régulièrement espacées les unes des autres, et présentent une même orientation angulaire dans le flux. Avantageusement, les aubes d'une même rangée sont identiques. Le carter peut être formé de plusieurs anneaux, ou de demi-coquilles.

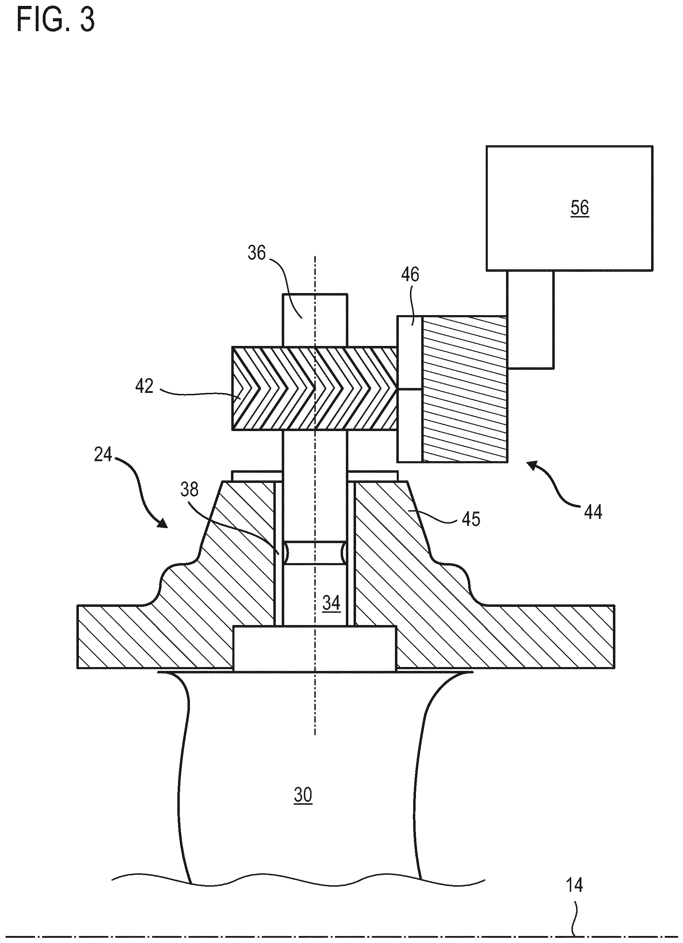

La figure 3 montre une vue plus précise de la fixation de l'aube orientable 30 sur le carter externe 24. On y retrouve la broche 36 de l'aube formant le tourillon 34, enfoncé dans l'orifice 38 du carter externe 24 de manière à traverser radialement ce dernier.

Dans la partie supérieure de la broche 36 se trouve un système d'engrenages selon l'invention. Ainsi, la broche 36 comprend une denture de commande 42, qui va être engrenée à une denture complémentaire 46 positionnée sur un anneau de commande 44. C'est la mise en rotation de l'anneau de commande 44 autour de l'axe de rotation 14 de la turbomachine qui entraîne la rotation de la denture de commande 42, et qui va conduire à la rotation de l'aube 30 sur elle-même. L'entrainement de ces éléments peut se faire grâce à des actionneurs 56, préférentiellement un ou des moteurs électriques afin de favoriser l'allégement global de la turbomachine. On peut également envisager l'utilisation de systèmes plus conventionnels, tels que des vérins hydrauliques, qui sont par ailleurs bien connu de l'homme du métier et bien décrit dans l'état de l'art.

La denture de commande 42 peut être formée par un pignon rapporté sur la broche 36, ou d'une denture taillée dans la broche. La denture de commande 42 est à distance radialement du carter 24, et notamment d'un bossage 45 formant une surépaisseur dans lequel l'orifice 38 est formé. L'anneau 44 peut également être à distance radialement du bossage 45.

Bien qu'une seule aube orientable 30 ne soit représentée, il est envisageable que la présente description s'applique à toute la rangée d'aubes orientables 30 correspondante.

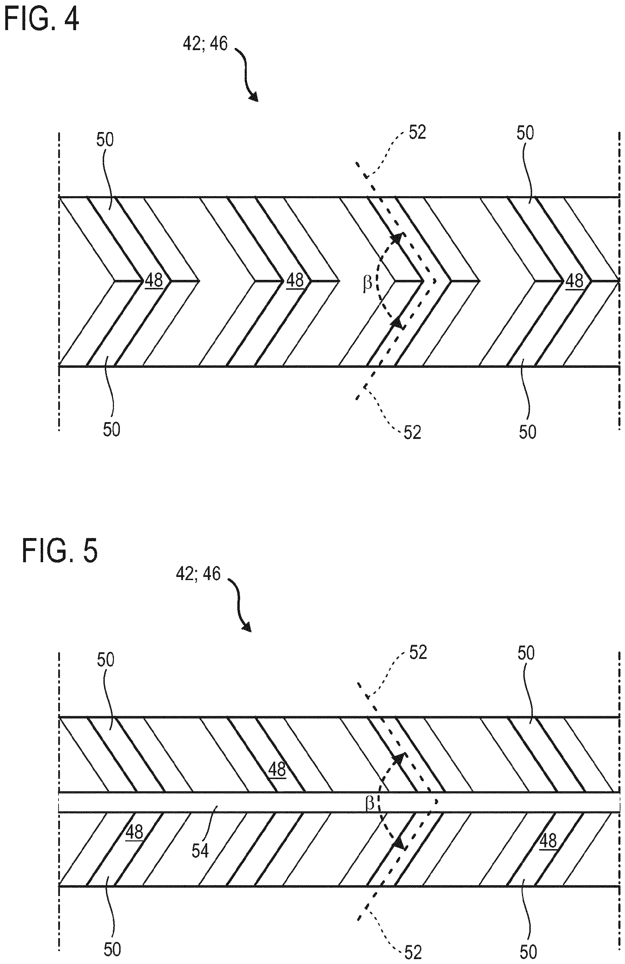

Les figures 4 et 5 montrent des développés à plat des dentures (42 ; 46) des aubes orientables et de l'anneau de commande, les dentures étant compatibles.

Les dentures (42 ; 46) forment des motifs pouvant être utilisés sur des pignons ou des bagues servant d'engrenages. Il s'agit plus particulièrement de deux motifs de chevrons.

La figure 4 représente une denture (42 ; 46) selon un premier mode de réalisation de l'invention.

La denture (42 ; 46) répète un motif en forme de chevron 48, ledit chevron 48 comportant deux dents 50. Les dents 50 sont inclinées l'un par rapport à l'autre.

Concrètement, chaque dent 50 s'étend selon un hélicoïde dans l'espace. Chaque dent comporte un axe général ou segment moyen 52, qui, lorsque les deux dents se rejoignent au milieu de la bague, décrit un angle β, préférentiellement compris entre 60° et 150°, et plus préférentiellement entre 90° et 120°. L'angle β peut être un angle moyen mesuré dans l'espace le long des dents 50.

Réduire l'angle β tend à augmenter le nombre de chevrons 48 en contact simultanément, ce qui permet d'augmenter le nombre de points de contact de denture, et donc les frottements utiles à l'amorti. En complément, la réduction de l'angle β permet d'augmenter la résultante mécanique radiale à l'intérieur des chevrons, et donc le maintien radial aube/anneau de commande. A l'inverse, augmenter l'angle β réduit les efforts d'actionnement lors de la modification des orientations des aubes. Donc, grâce à l'intervalle concernant l'angle β, l'invention offre un compromis incluant l'effort d'actionnement.

La figure 5 représente une denture (42 ; 46) selon un deuxième mode de réalisation de l'invention. Cette figure 5 reprend la numérotation des figures précédentes pour les éléments identiques ou similaires. Des numéros spécifiques sont utilisés pour les éléments spécifiques à ce mode de réalisation.

Il est également possible d'envisager, et ce, afin de faciliter la découpe des chevrons 48 dans le pignon monobloc ou de l'anneau monobloc, de prévoir un sillon central 54 où les extrémités des dents 50 sont en regard. Le sillon central 54 coupe les chevrons 48 et les segments 50. Il est également possible de prévoir deux bagues, chacune présentant un dessin d'hélice, qui sont dans un second temps réunies afin d'obtenir le pignon tel que décrit précédemment.

## Revendications

1. Compresseur (4, 6) de turbomachine (2), en particulier de turboréacteur, comprenant :
- au moins une rangée annulaire d'aubes (30) à orientation variable, chacune des aubes (30) comportant une denture de commande (42), et
- un anneau de commande (44) avec une denture de commande complémentaire (46) coopérant avec les dentures de commande (42) des aubes (30) de manière à varier leurs orientations,
**caractérisé en ce qu'**au moins une ou chaque denture de commande (42 ; 46) est une denture à chevrons (48), chaque chevron (48) comprenant des dents (50) formant entre elles un angle β compris entre 60° et 150°.

2. Compresseur (4, 6) de turbomachine (2) selon la revendication 1, **caractérisé en ce que** les dents (50) de chevron (48) forment entre elles un angle β compris entre 90° et 120°.

3. Compresseur (4, 6) de turbomachine (2) selon l'une des revendications 1 ou 2, **caractérisé en ce que** chaque dent (50) de chevron (48) s'étend selon un segment moyen, l'angle β étant défini entre les segments moyens d'un même chevron (48).

4. Compresseur (4, 6) de turbomachine (2) selon l'une des revendications 1 à 3, **caractérisé en ce que** les dentures des aubes (30) et de l'anneau de commande (44) sont configurées de manière à ce que chaque aube (30) comprenne au moins deux ou au moins quatre chevons (48) simultanément en contact de l'anneau (44).

5. Compresseur (4, 6) de turbomachine (2) selon l'une des revendications 1 à 4, **caractérisé en ce qu'**il comprend en outre un carter externe (24) à l'intérieur duquel les aubes à orientation variable (30) sont montées de manière pivotante, notamment selon un axe de pivotement radial.

6. Compresseur (4, 6) de turbomachine (2) selon la revendication 5, **caractérisé en ce que** chaque aube (30) comprend une broche (36) traversant radialement le carter externe (24), préférentiellement le carter externe (24) comprend des orifices (38) recevant les broches (36) des aubes (30) de manière à former des liaisons pivot.

7. Compresseur (4, 6) de turbomachine (2) selon l'une des revendications 5 à 6, **caractérisé en ce que** l'anneau de commande (44) est réalisé en métal, et le carter (24) est réalisé en matériau composite à matrice organique avec des fibres de carbone et/ou des fibres de verre.

8. Compresseur (4, 6) de turbomachine (2) selon l'une des revendications 5 à 7, **caractérisé en ce que** l'anneau de commande (44) forme une boucle autour du carter externe (24).

9. Compresseur (4, 6) de turbomachine (2) selon l'une des revendications 1 à 8, **caractérisé en ce que** l'anneau de commande (44) est entraîné par au moins un actionneur (56), notamment un moteur électrique.

10. Compresseur (4, 6) de turbomachine (2) selon l'une des revendications 1 à 9, **caractérisé en ce que** la denture de commande (42) de chaque aube (30) comprend au moins 30 chevrons (48).

11. Compresseur (4, 6) de turbomachine (2) selon l'une des revendications 1 à 10, **caractérisé en ce que** la denture complémentaire (46) de l'anneau de commande (44) comprend au moins 300 chevrons (48).

12. Compresseur (4, 6) de turbomachine (2) selon l'une des revendications 1 à 11, **caractérisé en ce que** chaque denture forme (42, 46) une bague monobloc.

13. Compresseur (4, 6) de turbomachine (2) selon l'une des revendications 1 à 12, **caractérisé en ce que** chaque denture (42, 46) comprend un sillon central (54) entre les deux dents (50) des chevrons (48).

14. Compresseur (4, 6) de turbomachine (2) selon l'une des revendications 1 à 13, **caractérisé en ce que** chaque denture (42, 46) est formée par deux bagues à hélices contraires dont les dents (50) se rejoignent au centre.

15. Turbomachine (2), notamment un turboréacteur, comprenant au moins un compresseur (4, 6) avec un rotor (12), **caractérisée en ce que** le ou au moins un compresseur (4, 6) est conforme à l'une des revendications 1 à 14, préférentiellement le ou au moins un compresseur (4, 6) est un compresseur basse pression (4) ou un compresseur haute pression (6), la turbomachine (2) comprenant le moteur électrique (56) adapté pour entraîner en rotation l'anneau de commande (44).

## Patentansprüche

1. Kompressor (4, 6) einer Turbomaschine (2), insbesondere für ein Turbinenstrahltriebwerk, bestehend aus:
- mindestens eine ringförmige Anordnung von Schaufeln (30) mit variabler Ausrichtung, jede Schaufel (30) mit einer Steuerverzahnung (42) und
- einen Steuerring (44) mit komplementärer Steuerverzahnung (46), die mit den Steuerverzahnungen (42) der Schaufeln (30) zusammenwirkt, um deren Ausrichtung zu variieren,
**dadurch gekennzeichnet, dass** mindestens ein oder jede Steuerverzahnung (42; 46) eine Pfeilverzahnung (48) ist, wobei jede Pfeilverzahnung (48) Zähne (50) aufweist, die untereinander einen Winkel β zwischen 60° und 150° bilden.

2. Kompressor (4, 6) für eine Turbomaschine (2) nach Anspruch 1, **dadurch gekennzeichnet, dass** die Zähne (50) der Pfeilverzahnung (48) untereinander einen Winkel β zwischen 90° bis 120° bilden.

3. Kompressor (4, 6) einer Turbomaschine (2) nach einem der Ansprüche 1 oder 2, **dadurch gekennzeichnet, dass** sich jeder Zahn (50) der Pfeilverzahnung (48) in ein mittleres Segment erstreckt, wobei der Winkel β zwischen den mittleren Segmenten derselben Pfeilverzahnung (48) definiert ist.

4. Kompressor (4, 6) einer Turbomaschine (2) nach einem der Ansprüche 1 bis 3, **dadurch gekennzeichnet, dass** die Zähne der Schaufeln (30) und des Steuerrings (44) so eingerichtet sind, dass jede Schaufel (30) mindestens zwei oder mindestens vier Pfeilverzahnungen (48) umfasst, die gleichzeitig in Kontakt mit dem Ring (44) sind.

5. Kompressor (4, 6) einer Turbomaschine (2) nach einem der Ansprüche 1 bis 4, **dadurch gekennzeichnet, dass** er ferner ein Außengehäuse (24) umfasst, in dem die Schaufeln mit variabler Richtung (30) schwenkbar gelagert sind, insbesondere entlang einer radialen Drehachse.

6. Kompressor (4, 6) einer Turbomaschine (2) nach Anspruch 5, **dadurch gekennzeichnet, dass** jede Schaufel (30) einen Zapfen (36) umfasst, der radial durch das Außengehäuse (24) weist, wobei das Außengehäuse (24) vorzugsweise Öffnungen (38) aufweist, die die Zapfen (36) der Schaufeln (30) aufnehmen, um Schwenkverbindungen zu bilden.

7. Kompressor (4, 6) einer Turbomaschine (2) nach einem der Ansprüche 5 bis 6, **dadurch gekennzeichnet, dass** der Steuerring (44) aus Metall und das Gehäuse (24) aus einem Verbundwerkstoff mit organischer Matrix und Kohlenstoff- und/oder Glasfasern hergestellt sind.

8. Kompressor (4, 6) einer Turbomaschine (2) nach einem der Ansprüche 5 bis 7, **dadurch gekennzeichnet, dass** der Steuerring (44) einen Ring um das Außengehäuse (24) bildet.

9. Kompressor (4, 6) einer Turbomaschine (2) nach einem der Ansprüche 1 bis 8, **dadurch gekennzeichnet, dass** der Steuerring (44) von mindestens einem Aktuator (56), insbesondere einem Elektromotor, angetrieben wird.

10. Kompressor (4, 6) einer Turbomaschine (2) nach einem der Ansprüche 1 bis 9, **dadurch gekennzeichnet, dass** die Steuerverzahnung (42) jeder Schaufel (30) mindestens 30 Pfeilverzahnungen (48) umfasst.

11. Kompressor (4, 6) einer Turbomaschine (2) nach einem der Ansprüche 1 bis 10, **dadurch gekennzeichnet, dass** die komplementäre Verzahnung (46) des Steuerrings (44) mindestens 300 Pfeilverzahnungen (48) umfasst.

12. Kompressor (4, 6) einer Turbomaschine (2) nach einem der Ansprüche 1 bis 11, **dadurch gekennzeichnet, dass** jede Verzahnung (42, 46) einen einteiligen Ring bildet.

13. Kompressor (4, 6) einer Turbomaschine (2) nach einem der Ansprüche 1 bis 12, **dadurch gekennzeichnet, dass** jede Verzahnung (42, 46) eine mittlere Nut (54) zwischen den beiden Zähnen (50) der Pfeilverzahnung (48) aufweist.

14. Kompressor (4, 6) einer Turbomaschine (2) nach einem der Ansprüche 1 bis 13, **dadurch gekennzeichnet, dass** jede Verzahnung (42, 46) durch zwei gegenüberliegende Propellerringe gebildet ist, deren Zähne (50) in der Mitte zusammenlaufen.

15. Turbomaschine (2), insbesondere Turbinenstrahltriebwerk, umfassend mindestens einen Kompressor (4, 6) mit einem Rotor (12), **dadurch gekennzeichnet, dass** der oder mindestens ein Kompressor (4, 6) einem der Ansprüche 1 bis 14 entspricht, wobei vorzugsweise der oder mindestens ein Kompressor (4, 6) ein Niederdruckkompressor (4) oder ein Hochdrucckompressor (6) ist, wobei die Turbomaschine (2) den Elektromotor (56) umfasst, der zum Rotieren des Steuerrings (44) ausgelegt ist.

## Claims

1. Compressor (4, 6) for a turbomachine (2), in particular a turbine engine, including:
- at least one annular row of variable-orientation vanes (30), each of the vanes (30) comprising a control gearing (42), and
- an actuator ring (44) with an additional control gearing (46) which cooperates with the control gearing (42) of the vanes (30) so as to vary their orientation,
**characterized in that** at least one or each control gearing (42; 46) is a herringbone gearing (48), each herringbone (48) including teeth (50) which form between them an angle β of between 60° and 150°.

2. Compressor (4, 6) for a turbomachine (2) according to claim 1, **characterized in that** the teeth (50) of the herringbone (48) form between them an angle β of between 90° and 120°.

3. Compressor (4, 6) for a turbomachine (2) according to any of claims 1 or 2, **characterized in that** each tooth (50) of the herringbone (48) extends along an average segment, the angle β being defined between the average segments of a same herringbone (48).

4. Compressor (4, 6) for a turbomachine (2) according to any of claims 1 to 3, **characterized in that** gearings of the vanes (30) and of the actuator ring (44) are configured so that each vane (30) includes at least two or at least four herringbones (48) simultaneously in contact with the ring (44).

5. Compressor (4, 6) for a turbomachine (2) according to any of claims 1 to 4, **characterized in that** said compressor additionally includes an outer casing (24) inside which the variable-orientation vanes (30) are pivotably mounted, notably along a radial pivot axis.

6. Compressor (4, 6) for a turbomachine (2) according to claim 5, **characterized in that** each vane (30) includes a spindle (36) which traverses the outer casing (24) in a radial manner, the outer casing (24) preferably includes apertures (38) which receive the spindles (36) of the vanes (30) so as to form pivoting connections.

7. Compressor (4, 6) for a turbomachine (2) according to either of claims 5 to 6, **characterized in that** the actuator ring (44) is made of metal, and the casing (24) is made of a composite material with organic matrix with carbon fibres and/or glass fibres.

8. Compressor (4, 6) for a turbomachine (2) according to one of claims 5 to 7, **characterized in that** the actuator ring (44) forms a loop around the outer casing (24).

9. Compressor (4, 6) for a turbomachine (2) according to one of claims 1 to 8, **characterized in that** the actuator ring (44) is driven by at least one actuator (56), notably an electric motor.

10. Compressor (4, 6) for a turbomachine (2) according to one of claims 1 to 9, **characterized in that** the control gearing (42) of each vane (30) includes at least 30 herringbones (48).

11. Compressor (4, 6) for a turbomachine (2) according to one of claims 1 to 10, **characterized in that** the additional gearing (46) of the actuator ring (44) includes at least 300 herringbones (48).

12. Compressor (4, 6) for a turbomachine (2) according to one of claims 1 to 11, **characterized in that** each gearing (42, 46) forms a single-piece ring.

13. Compressor (4, 6) for a turbomachine (2) according to one of claims 1 to 12, **characterized in that** each gearing (42, 46) includes a central groove (54) between the two teeth (50) of the herringbones (48).

14. Compressor (4, 6) for a turbomachine (2) according to one of claims 1 to 13, **characterized in that** each gearing (42, 46) is formed by two rings with oppositely orientated helices, the teeth (50) of which contact each other at the centre.

15. Turbomachine (2), notably a turbine engine, including at least one compressor (4, 6) with a rotor (12), **characterized in that** the compressor or at least one compressor (4, 6) is in accordance with any of claims 1 to 14, preferably the compressor or at least one compressor (4, 6) is a low-pressure compressor (4) or a high-pressure compressor (6), the turbomachine (2) including the electric motor (56) which is configured to rotate the actuator ring (44).
